# NEUE EUROPÄISCHE PATENTSCHRIFT

(11) **EP 2 077 921 B2**
(45) Veröffentlichungstag und Bekanntmachung des Hinweises auf die Entscheidung über den Einspruch: **24.01.2018**
(45) Hinweis auf die Patenterteilung: 24.03.2010
(21) Anmeldenummer: 08716116.2
(22) Anmeldetag: 28.02.2008
(51) Int. Cl.: B21K 1/10, B60B 35/04, B60B 35/08

(54) **ACHSKÖRPER**
AXLE BODY
CORPS D'ESSIEU

(30) Priorität: 01.03.2007 DE 102007010021
(43) Veröffentlichungstag der Anmeldung: 15.07.2009
(60) Teilanmeldung: 09169603.9
(73) Patentinhaber: SAF-HOLLAND GmbH, 63856 Bessenbach (DE)
(72) Erfinder: SPIELMANN, Rolf, 97877 Wertheim-Bettingen (DE); MEYER, Björn, 49074 Osnabrück (DE); DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2008/001589
(87) Internationale Veröffentlichungsnummer: WO 2008/104396

(56) Entgegenhaltungen:
- EP-A2- 0 806 311
- WO-A-2007/065235
- US- - 1 325 832
- US- - 1 823 158
- US- - 1 965 267
- US-A- 1 823 158
- US-A- 2 013 786
- US-A- 3 668 918
- US-A- 6 039 336
- US-A1- 2003 042 787
- COULSON J. ET AL: 'The Oxford Illustrated Dictionary', Bd. 2. EDIT., 1980, BOOK CLUB ASSOCIATES, LONDON Seite 626

## Beschreibung

Die vorliegende Erfindung bezieht sich auf einen Achskörper, eine Fahrwerksanordnung, ein Verfahren zur Herstellung eines Achskörpers, sowie auf ein Verfahren zur Herstellung einer Fahrwerksanordnung, welche insbesondere für ein Nutzfahrzeug vorgesehen sind.

Gattungsgemäße Achskörper sind aus der US 1 823 158 A bekannt. Im unteren Stand der Technik werden Achskörper verwendet, welche aus einem Achsrohr, einem linken und rechten Achsstummel sowie zwei Schalen bzw. Wraps bestehen. Das Achsrohr sowie die Achsstummel werden über ein Reibschweißverfahren im Wesentlichen konzentrisch bzw. koaxial miteinander verbunden. Um eine Verbindung zwischen dem Achsrohr und einem Achslenker bereitzustellen, werden die Schalen über ein Schutzgasschweißverfahren mit dem Achsrohr befestigt. Hierdurch kann der Achslenker umlaufend mit der Schale verschweißt werden, welche wiederum über zwei seitlich angeordnete Lochschweißungen mit dem Achsrohr verbunden ist. Somit wird erreicht, dass die umlaufende Schweißnaht, mit welcher der Achslenker befestigt wird, nicht direkt auf dem Achsrohr ausgeführt werden muss, da eine solche umlaufende Schweißnaht aufgrund der Kerbwirkung und aufgrund des Wärmeinflusses zu einer Schwächung des Achsrohrs führen würde, so dass sich die Gefahr eines Achsrohrbruches ergäbe.

Es ist somit Aufgabe der vorliegenden Erfindung, einen Achskörper, eine Fahrwerkanordnung, ein Verfahren zur Herstellung eines Achskörpers sowie ein Verfahren zur Herstellung einer Fahrwerkanordnung, insbesondere für ein Nutzfahrzeug, vorzusehen, mittels welchen gewährleistet wird, dass der Achskörper einfach und kostengünstig herzustellen ist und gleichzeitig ein hohes axiales und polares Widerstandsmoment aufweist und somit hohe Belastungen aufnehmen kann.

Diese Aufgabe wird durch einen Achskörper mit den Merkmalen gemäß Anspruch 1 und 6, eine Fahrwerksanordnung mit den Merkmalen gemäß Anspruch 10 und 13, ein Verfahren zur Herstellung eines Achskörpers bzw. einer Fahrwerksanordnung mit den Merkmalen der Ansprüche 11, 12, 14 und 15 gelöst. Bevorzugte Ausführungsformen ergeben sich aus den abhängigen Ansprüchen.

Erfindungsgemäß ist ein Achskörper, insbesondere für ein Nutzfahrzeug, vorgesehen, der im Wesentlichen als ein Achsrohr ausgebildet ist, umfassend einen Mittelabschnitt und zumindest einen daran anschließenden Aufnahmeabschnitt zur Aufnahme eines Achslenkers, wobei der Achskörper im Mittelabschnitt eine im Wesentlichen konstante Wandstärke aufweist, und wobei der Achskörper im Aufnahmeabschnitt zumindest bereichsweise eine Wandstärke aufweist, die größer als die Wandstärke des Mittelabschnitts ist. Der Achskörper ist als Achsrohr ausgebildet, wobei die Querschnittskonfiguration nicht zwingend kreisrund sein muss, sondern der Achskörper eine beliebige Querschnittskonfiguration aufweisen kann. So kann der Achskörper insbesondere eine ovale oder vieleckige Querschnittskonfiguration besitzen. Bevorzugterweise ist der Achskörper jedoch als Achsrohr mit einer kreisrunden Querschnittsfläche ausgebildet. Der erfindungsgemäße Achskörper ist derart ausgebildet, dass der Achskörper im Aufnahmeabschnitt zumindest bereichsweise eine Wandstärke aufweist, die aufgrund einer Umformung größer als die Wandstärke des Mittelabschnitts ist. Die Umformung kann vorteilhafterweise mittels eines Warm-Umformverfahrens erfolgen, z.B. durch Stauchen oder Schmieden. Zusätzlich oder alternativ kann die Umformung ebenfalls durch ein Kalt-Umformverfahren bewerkstelligt werden, wie beispielsweise ein Hydroform- oder Innenhochdruckumform-Verfahren. Es versteht sich, dass die Vergrößerung der Wandstärke des Mittelabschnitts ebenfalls durch alternative Umformverfahren ermöglicht werden kann. Im Gegensatz zu den aus dem Stand der Technik bekannten Achskörpern, die mittels eines Urformverfahrens, wie Gießen, hergestellt sind, wird bei dem bevorzugten erfindungsgemäßen Achskörper, der durch ein Umformverfahren hergestellt ist, eine deutlich höhere Festigkeit bei verminderten Herstellungskosten erzielt.

Der Achskörper weist einen Mittelabschnitt und zumindest einen daran anschließenden Aufnahmeabschnitt auf, wobei der Aufnahmeabschnitt in Achsrichtung sich an den Mittelabschnitt anschließt. Insbesondere stellt der Aufnahmeabschnitt ein stirnseitiges bzw. distales Ende des Achskörpers dar. Der Achskörper weist einen Mittelabschnitt auf, an dessen beiden gegenüberliegenden Stirnseiten jeweils ein Aufnahmeabschnitt angeordnet ist, so dass die Aufnahmeabschnitte die Enden des Achskörpers konstituieren. Der Aufnahmeabschnitt dient der Aufnahme eines Achslenkers, welcher vorzugsweise als Längslenker bzw. Querlenker bzw. Funktionslenker ausgebildet sein kann. Der Achslenker dient insbesondere der Anlenkung der Fahrzeugachse bzw. des Achskörpers an einem Fahrzeugrahmen Hierfür ist der Achslenker an dem Aufnahmeabschnitt angeordnet bzw. aufgenommen bzw. befestigt, wobei die Befestigung mittelbar oder unmittelbar erfolgen kann. In seinem Mittelabschnitt weist der Achskörper eine im Wesentlichen konstante Wandstärke auf. In anderen Worten ist die Wandstärke, welche durch die Differenz zwischen Außenradius und Innenradius (bzw. Außendurchmesser und Innendurchmesser) definiert ist, im Mittelabschnitt des Achskörpers in Achsrichtung bzw. Longitudinalrichtung bzw. Längsrichtung im Wesentlichen konstant bzw. gleich ausgebildet. Es versteht sich, dass etwaige Fertigungstoleranzen des Achsrohrs für die Konstantheit der Wandstärke nicht zu berücksichtigen sind. Entsprechend weist der Achskörper im Aufnahmeabschnitt ebenfalls eine Wandstärke auf, welche in entsprechender Weise ebenfalls durch die Differenz zwischen Außenradius und Innenradius (bzw. Außendurchmesser und Innendurchmesser) des Achsrohrs definiert ist. Diese ist jedoch größer als die Wandstärke des Mittelabschnitts des Achskörpers. Aufgrund der theoretischen Annahme, dass aus einer direkt auf der Achse ausgeführten umlaufenden Schweißnaht ein Festigkeitsverlust von ca. 50 % resultiert, ist es somit möglich, diesen Festigkeitsverlust über die geometrische Form der Achse zu kompensieren. Durch die partielle Aufdickung der Achsrohrwandstärke im Bereich der Schweißnaht zwischen Achslenker und Achskörper ist es somit möglich, zusätzlich Bauteile, wie Schalen (Wraps), auf welchen der Achslenker in der Regel aufgeschweißt wird, einzusparen, da der Achslenker direkt auf den Achskörper geschweißt werden kann. Dies führt insbesondere zu Kosten- und Gewichtsvorteilen, so dass der Produktionsprozess erheblich vereinfacht werden kann. Der Achskörper weist insbesondere im Bereich des Aufnahmeabschnitts und des Mittelabschnitts eine Wandstärke auf, die in radialer bzw. umfänglicher Richtung im Wesentlichen konstant ist. So weist der Achskörper in anderen Worten in radialer bzw. umfänglicher Richtung eine Wandstärke von im Wesentlichen gleich bleibender Dicke auf, wobei etwaige Fertigungstoleranzen oder Abweichungen in geringen Bereichen (beispielsweise bei Eck- oder Kantenbereichen einer vieleckigen Querschnittskonfiguration) zu vernachlässigen sind.

Der Außendurchmesser des Achskörpers ist im Aufnahmeabschnitt größer als im Mittelabschnitt. Es wird somit ein Achskörper geschaffen, der im Bereich des Aufnahmeabschnitts sich nach außen hervorwölbt. Hierbei kann der Innendurchmesser des Achskörpers über dessen gesamte Länge im Wesentlichen konstant ausgebildet sein, so dass der Innendurchmesser des Achskörpers im Bereich des Aufnahmeabschnitts dem des Achskörpers im Mittelabschnitt entspricht. Es versteht sich, dass der Innendurchmesser jedoch ebenfalls variieren kann, wie nachfolgend noch erläutert wird.

Vorzugsweise ist der Innendurchmesser des Achskörpers im Aufnahmeabschnitt geringer als im Mittelabschnitt ausgebildet. Entsprechend kann der Außendurchmesser über die gesamte Längserstreckung des Achskörpers im Wesentlichen konstant ausgebildet sein oder, wie oben erläutert, variabel ausgebildet sein, insbesondere im Bereich des Aufnahmeabschnitts größer als im Mittelabschnitt.

Es kann somit ein Achskörper vorgesehen sein, der einen Außendurchmesser aufweist, der im Aufnahmeabschnitt größer als im Mittelabschnitt ist und einen Innendurchmesser, welcher im Aufnahmeabschnitt geringer als im Mittelabschnitt ist, so dass sich im Aufnahmeabschnitt eine insgesamt in beide Richtungen (nach innen und nach außen) vorgesehene Verdickung bzw. Wandstärkenerhöhung ergibt.

In einer erfindungsgemäßen Ausführungsform ist der Achskörper im Aufnahmeabschnitt zumindest bereichsweise derart aufgeweitet, dass der Achsrohrquerschnitt vergrößert ist. Insbesondere erfolgt die Aufweitung des Achskörpers im Aufnahmeabschnitt derart, dass dessen Durchmesser aufgeweitet ist. Diese Aufweitung kann durch verschiedenste Umformverfahren oder Aufweitungsverfahren erzielt werden, beispielsweise durch Innenhochdruck-Umformverfahren, Knetverfahren oder durch sonstige mechanische Eingriffsmittel. Infolgedessen kann somit ein Achskörper bereitgestellt werden, dessen Aufnahmeabschnitt eine größere Wandstärke als der Mittelabschnitt hat, wobei der Außendurchmesser sowie der Innendurchmesser des Achskörpers im Bereich des Aufnahmeabschnitts größer als diejenigen im Bereich des Mittelabschnitts sind. Hierbei ist jedoch die Zunahme des Außendurchmessers größer als die Zunahme des Innendurchmessers, um eine höhere Wandstärke zu gewährleisten.

Zweckmäßigerweise ist die Wandstärke des Aufnahmeabschnitts im Wesentlichen konstant. In anderen Worten ist die Wandstärke des Aufnahmeabschnitts entlang einer Längsrichtung bzw. Axialrichtung - abgesehen von etwaigen Fertigungstoleranzen - im Wesentlichen konstant ausgebildet. Besonders Vorteilhafterweise ist hierbei insbesondere der Außendurchmesser des Achskörpers im Bereich des Aufnahmeabschnitts entlang der Längsrichtung im Wesentlichen gleich bzw. konstant ausgebildet.

In einer weiteren erfindungsgemäßen Ausführungsform weist der Aufnahmeabschnitt einen ersten und einen zweiten Verbindungsbereich zur Anordnung von Bereichen des Achslenkers, an welchen die Schweißnaht zwischen Achslenker und Achskörper ausgebildet ist, (wie z. B. Seitenwandungen des Achslenkers) sowie einen dazwischen liegenden Mittelbereich auf, wobei die Wandstärke des ersten und zweiten Verbindungsbereiches größer als die Wandstärke des Mittelabschnitts und des Mittelbereichs ist. Zweckmäßigerweise weist der Achskörper einen Aufnahmeabschnitt an jedem Ende des Mittelabschnitts auf, so dass an den beiden Endbereichen jeweils ein Achslenker angeordnet werden kann. Der Achslenker ist in der Regel derart ausgebildet, dass dieser kastenförmig geformt ist und somit zwei beabstandete Seitenwände bzw. -wandungen mit einer Durchtrittsöffnung aufweist, durch die sich der Achskörper bzw. der Aufnahmeabschnitt des Achskörpers erstreckt. Umlaufend um den Achskörper wird dieser mit den Seitenwandungen des Achslenkers verschweißt. Infolgedessen sind der erste und zweite Verbindungsbereich derart voneinander beabstandet, dass diese mit den Seitenwandungen des Achslenkers fluchten. Es versteht sich, dass der Achslenker nicht notwendigerweise Seitenwandungen aufweisen muss, so dass die vorteilhafte Anbindung des Achslenkers an den Achskörper generell auf diejenigen Verbindungsbereiche zutrifft, an welchen die Schweißnaht zwischen Achslenker und Achskörper vorgesehen ist. Vorteilhafterweise ist die Wandstärke des ersten und zweiten Verbindungsbereichs größer als die Wandstärke des Mittelbereichs des Aufnahmeabschnitts und/oder des Mittelabschnitts. Somit kann der Mittelbereich des Aufnahmeabschnitts im Wesentlichen die gleiche Wandstärke wie der Mittelabschnitt des Achskörpers aufweisen. Es versteht sich, dass der Mittelbereich jedoch auch eine andere Wandstärke aufweisen kann, vorzugsweise eine etwas größere Wandstärke als die Wandstärke des Mittelabschnitts. Durch eine derartige Konfiguration ergibt sich Vorteilhafterweise eine Gewichtseinsparung sowie eine Vereinfachung des Umformprozesses aufgrund des geringeren Umformgrades.

Vorzugsweise ist die Wandstärke des Mittelabschnitts und des Mittelbereichs im Wesentlichen gleich groß. Dies ergibt sich daraus, dass der Achskörper durch ein Stauchungsverfahren hergestellt wird, wobei der Achskörper lediglich im ersten und zweiten Verbindungsbereich des Aufnahmeabschnitts gestaucht ist, so dass der Mittelbereich des Aufnahmeabschnitts die ursprüngliche Wandstärke beibehält bzw. aufweist, welche im Wesentlichen der Wandstärke des Mittelabschnitts des Achskörpers entspricht.

Die Wandstärke des ersten Verbindungsbereichs ist größer als die des zweiten Verbindungsbereichs, wobei der erste Verbindungsbereich vorzugsweise der Achsmitte zugewandt ist. Insbesondere kann der Achskörper derart ausgebildet sein, dass der Außendurchmesser bzw. -radius des ersten Verbindungsbereichs größer als derjenige des zweiten Verbindungsbereichs ist. Der erste Verbindungsbereich ist Vorteilhafterweise der Achsmitte bzw. dem Mittelabschnitt zugewandt bzw. näher, wohin gegen der zweite Verbindungsbereich konsequenterweise weiter vom Mittelabschnitt bzw. von der Achsmitte beabstandet ist. Dies ist besonders vorteilhaft, da ein optimaler Kraftverlauf zwischen Achslenker und Achskörper geschaffen wird, da die höheren Kräfte, welche auf der Achsmitte zugewandten Seite auftreten, einem optimierten Konturverlauf folgen. Im Übrigen wird hierdurch eine Vertausch- und Verdrehsicherung eines entsprechend geformten Achslenkers ermöglicht.

Zweckmäßigerweise weist der Achskörper weiterhin zumindest einen Radaufnahmeabschnitt auf, der am Aufnahmeabschnitt angeordnet ist. Der Radaufnahmeabschnitt kann insbesondere als Achsstummel ausgebildet sein, wobei Vorteilhafterweise an jeder Seite bzw. jeder Stirnseite bzw. jedem Stirnbereich jeweils ein Achsstummel vorgesehen ist, der im Wesentlichen konzentrisch bzw. koaxial zu dem Achskörper angeordnet ist.

Vorzugsweise ist der Achskörper einstückig ausgebildet, d.h. aus einem Stück geformt. Der Achskörper kann hierfür auch einteilig bzw. integral geformt sein.

Es ist somit möglich den Radaufnahmeabschnitt direkt an dem Achskörper zu formen, so dass die beiden Einzelteile des Radaufnahmeabschnitts (rechts, links) und ein evtl. notwendiger Reibschweißprozess zum Verbinden der Radaufnahmeabschnitte mit dem Achskörper eingespart werden können.

Weiterhin erfindungsgemäß ist eine Fahrwerksanordnung, insbesondere für ein Nutzfahrzeug, vorgesehen, umfassend einen als Achsrohr ausgebildeten Achskörper und zumindest einen Achslenker, wobei der Achskörper einen Mittelabschnitt und zumindest einen daran anschließenden Aufnahmeabschnitt zur Aufnahme des Achslenkers aufweist, wobei der Achskörper im Mittelabschnitt eine im Wesentlichen konstante Wandstärke besitzt, und wobei der Achskörper im Aufnahmeabschnitt zumindest bereichsweise eine Wandstärke besitzt, die größer als die Wandstärke des Mittelabschnitts ist. Es wird somit Vorteilhafterweise eine Fahrwerksanordnung bereitgestellt, bei welcher der Achslenker besonders vorteilhaft am Aufnahmeabschnitt angeordnet bzw. befestigt werden kann. Diese Befestigung kann insbesondere unmittelbar bzw. direkt bzw. ohne ein Zwischenelement (wie einen Wrap) erfolgen, wobei eine umfängliche Schweißnaht zwischen dem Achslenker und dem Aufnahmeabschnitt den Achskörper, aufgrund der vergrößerten Wandstärke in diesem Bereich, nicht schwächt.

Es versteht sich, dass die eingangs erwähnten weiteren Merkmale und Vorteile des erfindungsgemäßen Achskörpers ebenfalls in der erfindungsgemäßen Fahrwerksanordnung Anwendung finden können.

Weiterhin erfindungsgemäß ist ein Verfahren zur Herstellung eines Achskörpers, insbesondere für ein Nutzfahrzeug, vorgesehen, umfassend die Schritte: Bereitstellen eines Achsrohrs mit einem im Wesentlichen konstanten Rohrquerschnitt, umfassend einen Mittelabschnitt und zumindest einen daran anschließenden Aufnahmeabschnitt zur Aufnahme eines Achslenkers, und Stauchen und/oder Schmieden des Aufnahmeabschnitts derart, dass zumindest bereichsweise eine Vergrößerung der Wandstärke des Aufnahmeabschnitts geschaffen wird.

Schließlich wird erfindungsgemäß ebenfalls ein Verfahren zur Herstellung einer Fahrwerksanordnung, insbesondere für ein Nutzfahrzeug, vorgesehen, umfassend die Schritte: Bereitstellen zumindest eines Achslenkers, Bereitstellen eines Achsrohrs mit einem im Wesentlichen konstanten Rohrquerschnitt, umfassend einen Mittelabschnitt und zumindest einen daran anschließenden Aufnahmeabschnitt zur Anordnung des Achslenkers, Stauchen und/oder Schmieden des Aufnahmeabschnitts derart, dass zumindest bereichsweise eine Vergrößerung der Wandstärke des Aufnahmeabschnitts geschaffen wird und unmittelbares Befestigen des Achslenkers am Aufnahmeabschnitt.

Es versteht sich, dass die Vorteile und Merkmale des erfindungsgemäßen Achskörpers sowie der erfindungsgemäßen Fahrwerksanordnung ebenfalls in den Verfahren zur Herstellung eines Achskörpers sowie einer Fahrwerksanordnung Anwendung finden können.

Weitere Vorteile und Merkmale der Erfindung ergeben sich aus der nachfolgenden Beschreibung bevorzugter Ausführungsformen mit Bezug auf die beigefügten Figuren, wobei einzelne Ausführungsformen zu neuen Ausführungsformen miteinander kombinierbar sind. Es zeigen:
Fig. 1 eine Querschnittsansicht eines Achskörpers gemäß einer Ausführungsform
Fig. 2 Querschnittsansichten von Aufnahmeabschnitten gemäß einer Ausführungsform der Erfindung (Fig. 2d) und des Standes der Technik (Figs. 2a - 2c).
Fig. 3 Querschnittsansichten von Aufnahmeabschnitten gemäß verschiedener beispielhafter Ausführungsformen (Fig. 3a und Fig. 3b) sowie eine Ausführungsform gemäß der Erfindung (Fig. 3c).
Fig. 4 eine Querschnittsansicht eines Achskörpers gemäß einer Ausführungsform.
Fig. 5 Seitenansichten von Achskörpern gemäß weiterer Ausführungsformen der Erfindung.

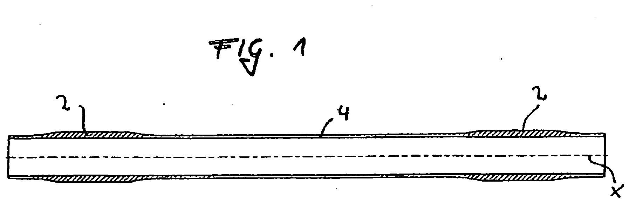

In Fig. 1 ist eine Querschnittsansicht einer ersten Ausführungsform des Achskörpers dargestellt. Der Achskörper umfasst zumindest einen Aufnahmeabschnitt 2 sowie einen Mittelabschnitt 4. In der dargestellten Ausführungsform weist der Achskörper zwei Aufnahmeabschnitte 2 auf, zwischen welchen der Mittelabschnitt 4 angeordnet ist. Die Aufnahmeabschnitte 2 bilden somit die Stirnseitenbereiche bzw. distalen Enden des Achskörpers aus. Der Aufnahmeabschnitt 2 und der Mittelabschnitt 4 sind im Wesentlichen konzentrisch bzw. koaxial zu einer Längsachse X des Achskörpers angeordnet.

Der Aufnahmeabschnitt 2 dient der Aufnahme bzw. Befestigung bzw. Anordnung eines Achslenkers. Der Achslenker kann insbesondere als Längslenker, Querlenker, Funktionslenker etc., ausgebildet sein und dient zur Anlenkung der Achse an einem Rahmen des Fahrzeugs. Vorteilhafterweise erfolgt die Befestigung des Achslenkers an dem Achskörper bzw. dessen Aufnahmeabschnitt 2 direkt bzw. unmittelbar. In anderen Worten ist der Achslenker ohne ein Zwischenelement, wie einen Wrap, an dem Aufnahmeabschnitt 2 (z.B. durch Verschweißen) befestigt. Hierdurch ergibt sich ein Kosten- und Gewichtsvorteil aufgrund einer erheblichen Vereinfachung des Produktionsprozesses der Radaufhängungseinheit bzw. Fahrwerksanordnung.

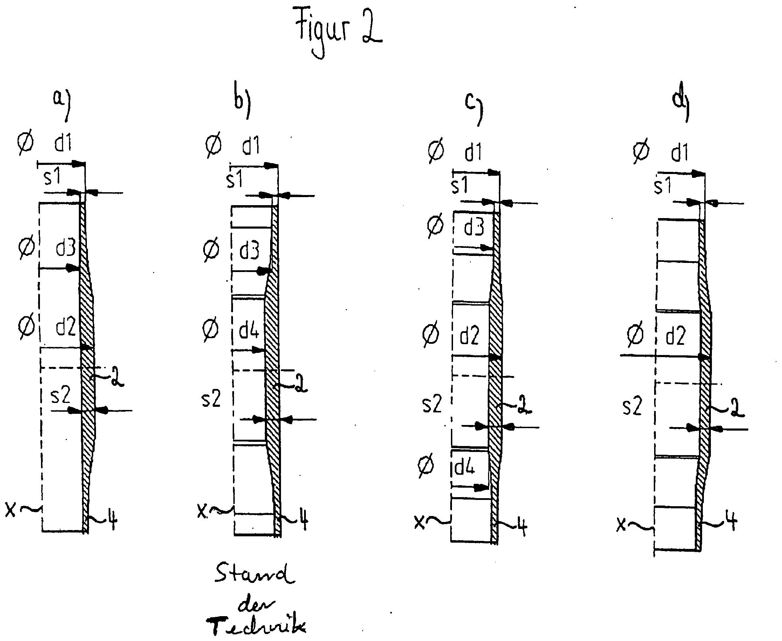

In Fig. 2 sind Querschnittsansichten verschiedener Ausführungsformen des Aufnahmeabschnitts 2 dargestellt. So zeigt die Fig. 2a einen Aufnahmeabschnitt, bei welchem der Außendurchmesser d2 des Achskörpers im Aufnahmeabschnitt 2 größer als der.Außendurchmesser d1 des Mittelabschnitts 4 ist. Vorteilhafterweise ist der Innendurchmesser d3 im Aufnahmeabschnitt 2 und Mittelabschnitt 4 gleich bzw. konstant ausgebildet. Infolgedessen ergibt sich im Bereich des Aufnahmeabschnitts 2 eine Wandstärke s2, welche größer als die Wandstärke s1 im Bereich des Mittelabschnitts 4 ist.

In der in Fig. 2b dargestellten Ausführungsform ist der Achskörper derart ausgebildet, dass der Innendurchmesser d4 des Achskörpers im Bereich des Aufnahmeabschnitts 2 geringer als der Innendurchmesser d3 des Achskörpers im Bereich des Mittelabschnitts 4 ist. Der Außendurchmesser d1 des Achskörpers ist in dieser Ausführungsform entlang der Längsachse X in dem Bereich des Aufnahmeabschnitts 2 und Mittelabschnitts 4 im Wesentlichen gleich bzw. konstant ausgebildet. Somit ergibt sich im Bereich des Aufnahmeabschnitts 2 eine Wandstärke s2, welche größer als die Wandstärke s1 im Bereich des Mittelabschnitts 4 ist.

Es versteht sich, dass bei den in Figuren 2a und 2b dargestellten Ausführungsformen der Innendurchmesser bzw. Außendurchmesser nicht konstant ausgebildet sein muss, sondern ebenfalls im Bereich des Aufnahmeabschnitts 2 zu- bzw. abnehmen kann. Hieraus ergibt sich die in Fig. 2c dargestellte Ausführungsform, in welcher der Außendurchmesser d2 des Achskörpers im Bereich des Aufnahmeabschnitts 2 größer als der Außendurchmesser d1 im Mittelabschnitt 4 ist, sowie der Innendurchmesser d4 des Achskörpers im Bereich des Aufnahmeabschnitts 2 geringer als der Innendurchmesser d3 im Bereich des Mittelabschnitts 4 ist. Infolgedessen ergibt sich im Bereich des Aufnahmeabschnitts 2 eine Wandstärke s2, welche größer als die Wandstärke s1 im Bereich des Mittelabschnitts 4 ist.

In der in Fig. 2d dargestellten besonders vorteilhaften Ausführungsform ist der Achskörper im Bereich des Aufnahmeabschnitts 2 derart aufgeweitet, dass der Achsrohrquerschnitt vergrößert ist. Dies wird erzielt, indem sowohl Innen- als auch Außendurchmesser des Achskörpers im Bereich des Aufnahmeabschnitts 2 größer als im Bereich des Mittelabschnitts 4 sind. Um eine Vergrößerung der Wandstärke s2 im Bereich des Aufnahmeabschnitts 2 zu erzielen, ist jedoch die Vergrößerung des Außendurchmessers stärker als die des Innendurchmessers. Es ergibt sich im Bereich des Aufnahmeabschnitts 2 eine Wandstärke s2, welche größer als die Wandstärke s1 im Bereich des Mittelabschnitts 4 ist. Durch diese Ausführungsform wird ein besonders vorteilhafter Achskörper bereitgestellt, der ein besonders hohes axiales sowie polares Widerstandsmoment aufweist und somit starke Kräfte aufnehmen kann.

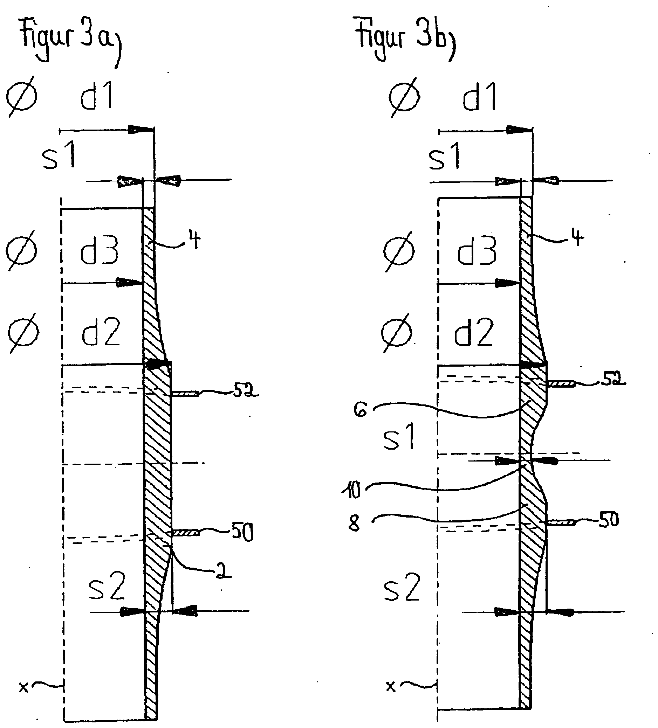

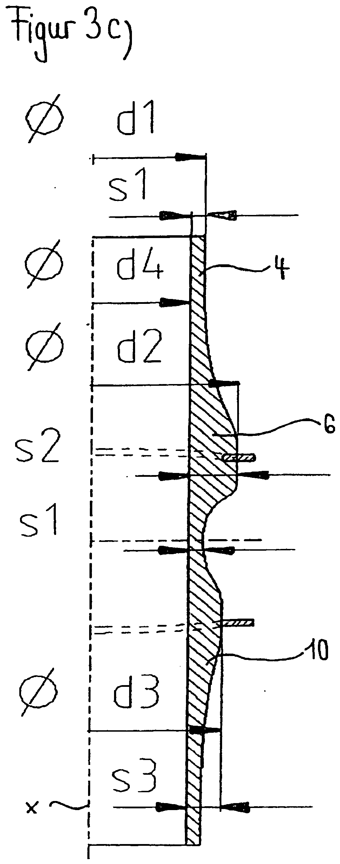

In **Fig. 3** ist die Anbindung des Achskörpers an Seitenwandungen 50, 52 des Achslenkers dargestellt. Es versteht sich, dass der Achslenker nicht notwendigerweise Seitenwandungen 50, 52 aufweisen muss, so dass die im folgenden dargestellten Anbindungen des Achslenkers an den Achskörper generell auf diejenigen Verbindungsbereiche zutreffen, an welchen die Schweißnaht zwischen Achslenker und Achskörper vorgesehen ist. In Fig. 3a ist der Achskörper derart ausgebildet, dass die Wandstärke s2 des Aufnahmeabschnitts 2 im Wesentlichen konstant entlang der Längsachse X verläuft. Hingegen ist in Fig. 3b eine Ausführungsform des Achskörpers dargestellt, die einen Aufnahmeabschnitt 2 aufweist, welcher einen ersten Verbindungsbereich 6 und einen zweiten Verbindungsbereich 8 aufweist. Der erste und zweite Verbindungsbereich 6, 8 dienen der Aufnahme bzw. Befestigung der Seitenwandungen 50, 52 des Achslenkers. Zwischen dem ersten Verbindungsbereich 6 und dem zweiten Verbindungsbereich 8 liegt, in Richtung der Längsachse gesehen, ein Mittelbereich 10. Vorteilhafterweise ist die Wandstärke s2 des ersten und zweiten Verbindungsbereichs 6, 8 größer als die Wandstärke s1 des Mittelbereichs 10. Die Wandstärke s1 des Mittelbereichs 10 entspricht besonders Vorteilhafterweise der Wandstärke s1 des Mittelabschnitts 4..

Die Ausführungsform gemäß Fig. 3c unterscheidet sich von der in Fig. 3b dargestellten Ausführungsform dahingehend, dass die Wandstärke s2 des ersten Verbindungsbereichs 6 größer als die Wandstärke s3 des zweiten Verbindungsbereichs 8 ist. Vorteilhafterweise sind der erste Verbindungsbereich 6 und der zweite Verbindungsbereich 8 derart in Bezug auf den Achskörper angeordnet, dass der erste Verbindungsbereich 6 der Achsmitte bzw. dem Zentrum der Achse zugewandt ist, wohin gegen der zweite Verbindungsbereich 8 dem distalen Ende des Achskörpers zugewandt bzw. näher liegend ist. Dies führt zu einem optimalen Kraftverlauf zwischen dem Achslenker und dem Achskörper, da die höheren Kräfte, welche auf der der Achsmitte zugewandten Seite auftreten, einem optimierten Konturverlauf folgen können. Darüber hinaus lässt sicht durch die Ausbildung des ersten und zweiten Verbindungsbereichs 6, 8 mit verschiedenen Wandstärken s2, s3 eine Vertausch- und Verdrehsicherung in Bezug auf den Achslenker realisieren.

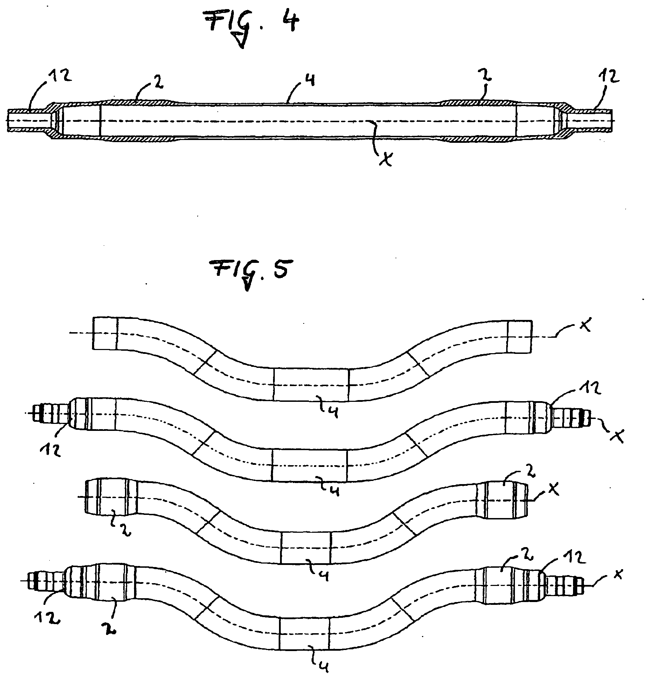

In **Fig. 4** ist eine Querschnittsansicht einer bevorzugten Ausführungsform des Achskörpers dargestellt. Der Achskörper weist in der dargestellten Ausführungsform an jeder Stirnseite einen Radaufnahmeabschnitt 12 auf, der als Achsstummel ausgebildet ist. Der Radaufnahmeabschnitt 12 ist im Wesentlichen konzentrisch bzw. koaxial zur Längsachse X am Aufnahmeabschnitt 2 angeordnet bzw. befestigt. Bei einer einstückigen Ausbildung des Achskörpers ist es vorteilhaft, wenn die Radaufnahmeabschnitte 12 über ein Stauch- und Schmiedeverfahren direkt auf dem Achskörper ausgebildet werden. Es versteht, sich dass die Ausbildung des Radaufnahmeabschnitts 12 an dem Achskörper in Kombination bzw. im gleichen Fertigungsschritt mit der Verstärkung der Wandstärkenbereiche des Aufnahmeabschnitts 2 möglich ist. Dies kann jedoch auch in einem separaten Prozess erfolgen. Hierdurch können weiter hin Produktionskosten eingespart werden, da der notwendige Schweißprozess (bspw. Reibschweißprozess) zur Verbindung des Radaufnahmeabschnitts 12 an dem Achskörper entfällt.

Das zur Vergrößerung der Wandstärke im Bereich des Aufnahmeabschnitts 2 genutzte Umformverfahren (wie bspw. ein Stauch- und Schmiedeverfahren) ist ebenfalls nutzbar zur Verformung des gesamten Achskörpers, wie dies in **Fig. 5** dargestellt ist. Hierdurch ist es möglich, einen Achskörper herzustellen, dessen zentraler Bereich bzw. Mittelabschnitt 4 zumindest bereichsweise vorzugsweise in lediglich einer Ebene verschoben ist (eine Verschiebung in zwei Ebenen ist ebenfalls möglich), so dass eine so genannte Drop-Center-Achse hieraus resultiert. Diese Umformung ist einem einzelnen Achskörper, bei einem Achskörper mit direkten geschmiedeten Radaufnahmeabschnitten 12 sowie einem Achskörper, gemäß der Erfindung mit partieller Aufdickung (d.h. Vergrößerung der Wandstärke) und angeschmiedeten Radaufnahmeabschnitten, möglich. Ein in dieser Form gestalteter Achskörper bietet die Möglichkeit, besonders Bauraum-optimierte Fahrwerksanordnungen bereitzustellen.

### Bezugszeichenliste

- 2: Aufnahmeabschnitt
- 4: Mittelabschnitt
- 6: erster Verbindungsbereich
- 8: zweiter Verbindungsbereich
- 10: Mittelbereich
- 12: Radaufnahmeabschnitt
- 50: Seitenwandung
- 52: Seitenwandung
- s1, s2, s3: Wandstärke
- d1, d2, d3, d4: Durchmesser

## Patentansprüche

1. Achskörper, insbesondere für ein Nutzfahrzeug, der im Wesentlichen als Achsrohr ausgebildet ist, umfassend
einen Mittelabschnitt (4) und zumindest einen daran anschließenden Aufnahmeabschnitt (2) zur Aufnahme eines Achslenkers,
wobei der Achskörper im Mittelabschnitt eine im Wesentlichen konstante Wandstärke (s1) aufweist,
wobei der Achskörper im Aufnahmeabschnitt (2) zumindest bereichsweise eine Wandstärke (s2, s3) aufweist, die aufgrund einer Umformung größer als die Wandstärke (s1) des Mittelabschnitts ist, **dadurch gekennzeichnet, dass** der Außendurchmesser (d2) des Achskörpers im Aufnahmeabschnitt (2) größer als im Mittelabschnitt (4) ist,
wobei der Aufnahmeabschnitt (2) einen ersten und einen zweiten Verbindungsbereich (6, 8) zur Anordnung von Seitenwandungen (50, 52) des Achslenkers sowie einen dazwischenliegenden Mittelbereich (10) aufweist, wobei die Wandstärke (s2, s3) des ersten und zweiten Verbindungsbereichs größer als die Wandstärke (s1) des Mittelbereichs (10) und des Mittelabschnitts (4) ist, und
wobei die Wandstärke (s2) des ersten Verbindungsbereichs (6) größer als die des zweiten Verbindungsbereichs (8) ist.

2. Achskörper nach Anspruch 1, wobei der Innendurchmesser (d4) des Achskörpers im Aufnahmeabschnitt (2) geringer als im Mittelabschnitt (4) ist.

3. Achskörper nach Anspruch 1, wobei der Achskörper im Aufnahmeabschnitt (2) zumindest bereichsweise derart aufgeweitet ist, dass der Achsrohrquerschnitt vergrößert ist.

4. Achskörper nach einem der vorhergehenden Ansprüche, wobei die Wandstärke (s1) des Mittelabschnitts (4) und des Mittelbereichs (10) im Wesentlichen gleich groß ist.

5. Achskörper nach einem der vorhergehenden Ansprüche, wobei die Wandstärke (s2) des ersten Verbindungsbereichs (6) größer als die des zweiten Verbindungsbereich (8) ist, wobei der erste Verbindungsbereich (6) vorzugsweise der Achsmitte zugewandt ist.

6. Achskörper, insbesondere für ein Nutzfahrzeug, der im Wesentlichen als Achsrohr ausgebildet ist, umfassend
einen Mittelabschnitt (4) und zumindest einen daran anschließenden Aufnahmeabschnitt (2) zur Aufnahme eines Achslenkers,
wobei der Achskörper im Mittelabschnitt eine im Wesentlichen konstante Wandstärke (s1) aufweist,
wobei der Achskörper im Aufnahmeabschnitt (2)
eine Wandstärke (s2, s3) aufweist, die aufgrund einer Umformung größer als die Wandstärke (s1) des Mittelabschnitts ist, **dadurch gekennzeichnet, dass** der Außendurchmesser (d2) des Achskörpers im Aufnahmeabschnitt (2) größer als im Mittelabschnitt (4) ist,
wobei der Achskörper im Aufnahmeabschnitt (2)
derart aufgeweitet ist, dass der Achsrohrquerschnitt vergrößert ist, und wobei der Innendurchmesser und der Außendurchmesser des Achskörpers im Bereich des Aufnahmeabschnitts (2) größer als im Bereich des Mittelabschnitts (4) sind.

7. Achskörper nach Anspruch 6, wobei die Wandstärke (s2) des Aufnahmeabschnitts (2) im Wesentlichen konstant ist.

8. Achskörper nach einem der vorhergehenden Ansprüche, weiterhin aufweisend zumindest einen Radaufnahmeabschnitt (12), der am Aufnahmeabschnitt (2) angeordnet ist.

9. Achskörper nach einem der vorhergehenden Ansprüche, wobei der Achskörper einstückig ausgebildet ist.

10. Fahrwerksanordnung, insbesondere für ein Nutzfahrzeug, umfassend einen als Achsrohr ausgebildeten Achskörper und zumindest einen Achslenker, wobei der Achskörper einen Mittelabschnitt (4) und zumindest einen daran anschließenden Aufnahmeabschnitt (2) zur Aufnahme des Achslenkers aufweist,
wobei der Achskörper im Mittelabschnitt (4) eine im Wesentlichen konstante Wandstärke (s1) besitzt,
wobei der Achskörper im Aufnahmeabschnitt (2) zumindest bereichsweise eine Wandstärke (s2, s3) besitzt, die aufgrund eine Umformung größer als die Wandstärke (s1) des Mittelabschnitts (4) ist, **dadurch gekennzeichnet, dass** der Außendurchmesser (d2) des Achskörpers im Aufnahmeabschnitt (2) größer als im Mittelabschnitt (4) ist,
wobei der Aufnahmeabschnitt (2) einen ersten und einen zweiten Verbindungsbereich (6, 8) zur Anordnung von Seitenwandungen (50, 52) des Achslenkers sowie einen dazwischenliegenden Mittelbereich (10) aufweist, wobei die Wandstärke (s2, s3) des ersten und zweiten Verbindungsbereichs größer als die Wandstärke (s1) des Mittelbereichs (10) und des Mittelabschnitts (4) ist, und
wobei die Wandstärke (s2) des ersten Verbindungsbereichs (6) größer als die des zweiten Verbindungsbereichs (8) ist.

11. Verfahren zur Herstellung eines Achskörpers, insbesondere für ein Nutzfahrzeug, umfassend die Schritte:
- Bereitstellen eines Achsrohrs mit einem im Wesentlichen konstanten Rohrquerschnitt umfassend einen Mittelabschnitt (4) und zumindest einen daran anschließenden Aufnahmeabschnitt (2) zur Aufnahme eines Achslenkers, und
- Stauchen und/oder Schmieden des Aufnahmeabschnitts (2) derart, dass zumindest bereichsweise eine Vergrößerung der Wandstärke (s2, s3) des Aufnahmeabschnitts (2) und eine Vergrößerung des Außendurchmessers (d2) des Achskörpers im Aufnahmeabschnitt (2) geschaffen wird,
wobei der Aufnahmeabschnitt (2) einen ersten und einen zweiten Verbindungsbereich (6, 8) zur Anordnung von Seitenwandungen (50, 52) des Achslenkers sowie einen dazwischenliegenden Mittelbereich (10) aufweist, wobei die Wandstärke (s2, s3) des ersten und zweiten Verbindungsbereichs größer als die Wandstärke (s1) des Mittelbereichs (10) und des Mittelabschnitts (4) ist, und
wobei die Wandstärke (s2) des ersten Verbindungsbereichs (6) größer als die des zweiten Verbindungsbereichs (8) ist.

12. Verfahren zur Herstellung einer Fahrwerksanordnung, insbesondere für ein Nutzfahrzeug, umfassend die Schritte:
- Bereitstellen zumindest eines Achslenkers,
- Bereitstellen eines Achsrohrs mit einem im Wesentlichen konstanten Rohrquerschnitt umfassend einen Mittelabschnitt (4) und zumindest einen daran anschließenden Aufnahmeabschnitt (2) zur Anordnung des Achslenkers,
- Stauchen und/oder Schmieden des Aufnahmeabschnitts (2) derart, dass zumindest bereichsweise eine Vergrößerung der Wandstärke (s2, s3) des Aufnahmeabschnitts (2) und eine Vergrößerung des Außendurchmessers (d2) des Achskörpers im Aufnahmeabschnitt (2) geschaffen wird,
wobei der Aufnahmeabschnitt (2) einen ersten und einen zweiten Verbindungsbereich (6, 8) zur Anordnung von Seitenwandungen (50, 52) des Achslenkers sowie einen dazwischenliegenden Mittelbereich (10) aufweist, wobei die Wandstärke (s2, s3) des ersten und zweiten Verbindungsbereichs größer als die Wandstärke (s1) des Mittelbereichs (10) und des Mittelabschnitts (4) ist, und
wobei die Wandstärke (s2) des ersten Verbindungsbereichs (6) größer als die des zweiten Verbindungsbereichs (8) ist, und
- unmittelbares Befestigen des Achslenkers am Aufnahmeabschnitt (2).

13. Fahrwerksanordnung, insbesondere für ein Nutzfahrzeug, umfassend einen als Achsrohr ausgebildeten Achskörper und zumindest einen Achslenker, wobei der Achskörper einen Mittelabschnitt (4) und zumindest einen daran anschließenden Aufnahmeabschnitt (2) zur Aufnahme des Achslenkers aufweist,
wobei der Achskörper im Mittelabschnitt (4) eine im Wesentlichen konstante Wandstärke (s1) besitzt,
wobei der Achskörper im Aufnahmeabschnitt (2)
eine Wandstärke (s2, s3) besitzt, die aufgrund einer Umformung größer als die Wandstärke (s1) des Mittelabschnitts (4) ist, **dadurch gekennzeichnet, dass** der Außendurchmesser (d2) des Achskörpers im Aufnahmeabschnitt (2) größer als im Mittelabschnitt (4) ist,
wobei der Achskörper im Aufnahmeabschnitt (2) derart aufgeweitet ist, dass der Achsrohrquerschnitt vergrößert ist, und wobei der Innendurchmesser und der Außendurchmesser des Achskörpers im Bereich des Aufnahmeabschnitts (2) größer als im Bereich des Mittelabschnitts (4) sind.

14. Verfahren zur Herstellung eines Achskörpers, insbesondere für ein Nutzfahrzeug, umfassend die Schritte:
- Bereitstellen eines Achsrohrs mit einem im Wesentlichen konstanten Rohrquerschnitt umfassend einen Mittelabschnitt (4) und zumindest einen daran anschließenden Aufnahmeabschnitt (2) zur Aufnahme eines Achslenkers, und
- Stauchen und/oder Schmieden des Aufnahmeabschnitts (2) derart, dass eine Vergrößerung der Wandstärke (s2, s3) des Aufnahmeabschnitts (2) und eine Vergrößerung des Außendurchmessers (d2) des Achskörpers im Aufnahmeabschnitt (2) geschaffen wird,
wobei der Achskörper im Aufnahmeabschnitt (2) derart aufgeweitet ist, dass der Achsrohrquerschnitt vergrößert ist, und wobei der Innendurchmesser und der Außendurchmesser des Achskörpers im Bereich des Aufnahmeabschnitts (2) größer als im Bereich des Mittelabschnitts (4) sind.

15. Verfahren zur Herstellung einer Fahrwerksanordnung, insbesondere für ein Nutzfahrzeug, umfassend die Schritte:
- Bereitstellen zumindest eines Achslenkers,
- Bereitstellen eines Achsrohrs mit einem im Wesentlichen konstanten Rohrquerschnitt umfassend einen Mittelabschnitt (4) und zumindest einen daran anschließenden Aufnahmeabschnitt (2) zur Anordnung des Achslenkers,
- Stauchen und/oder Schmieden des Aufnahmeabschnitts (2) derart, dass eine Vergrößerung der Wandstärke (s2, s3) des Aufnahmeabschnitts (2) und eine Vergrößerung des Außendurchmessers (d2) des Achskörpers im Aufnahmeabschnitt (2) geschaffen wird,
wobei der Achskörper im Aufnahmeabschnitt (2) derart aufgeweitet ist, dass der Achsrohrquerschnitt vergrößert ist, und wobei der Innendurchmesser und der Außendurchmesser des Achskörpers im Bereich des Aufnahmeabschnitts (2) größer als im Bereich des Mittelabschnitts (4) sind, und
- unmittelbares Befestigen des Achslenkers am Aufnahmeabschnitt (2).

## Claims

1. Axle body, especially for a commercial vehicle, which is basically formed as an axle pipe, comprising
a center section (4) and at least one adjoining receiving section (2) for receiving an axle guide,
wherein the axle body in the center section has an essentially constant wall thickness (s1),
wherein the axle body in the receiving section (2) has at least in some regions a wall thickness (s2, s3) which is greater than the wall thickness (s1) of the center section due to a forming process, and **characterized in that**
the outer diameter (d2) of the axle body is larger in the receiving section (2) than in the center section (4)
wherein the receiving section (2) has a first and a second connection region (6, 8) for arrangement of side walls (50, 52) of the axle guide, as well as a center region (10) lying in between, and the wall thickness (s2, s3) of the first and second connection region is greater than the wall thickness (s1) of the center region (10) and the center section (4), and
wherein the wall thickness (s2) of the first connection region (6) is greater than that of the second connection region (8).

2. Axle body according to claim 1, wherein the inner diameter (d4) of the axle body is smaller in the receiving section (2) than in the center section (4).

3. Axle body according to claim 1, wherein the axle body is widened or broadened at least in some regions in the receiving section (2) so that the cross section of the axle pipe is enlarged.

4. Axle body according to one of the preceding claims, wherein the wall thickness (s1) of the center section (4) and the center region (10) is basically the same.

5. Axle body according to one of the proceeding claims, wherein the wall thickness (s2) of the first connection region (6) is greater than that of the second connection region (8), wherein the first connection region (6) is preferably toward the center of the axle.

6. Axle body, especially for a commercial vehicle, which is basically formed as an axle pipe, comprising
a center section (4) and at least one adjoining receiving section (2) for receiving an axle guide,
wherein the axle body in the center section has an essentially constant wall thickness (s1),
wherein the axle body in the receiving section (2) has a wall thickness (s2, s3) which is greater than the wall thickness (s1) of the center section due to a forming process, and **characterized in that**
the outer diameter (d2) of the axle body is larger in the receiving section (2) than in the center section (4)
wherein the axle body is widened or broadened in the receiving section (2) so that the cross section of the axle pipe is enlarged, and
wherein the inner diameter and the outer diameter of the axle body in the region of the receiving section (2) are greater than in the center section (4).

7. Axle body according to claim 6, wherein the wall thickness (s2) of the receiving section (2) is basically constant.

8. Axle body according to one of the preceding claims, furthermore having at least one wheel receiving section (12), which is arranged at the receiving section (2).

9. Axle body according to one of the preceding claims, wherein the axle body is formed as a single piece.

10. Running gear design, especially for a commercial vehicle, comprising an axle body formed as an axle pipe and at least one axle guide,
wherein the axle body has a center section (4) and at least one adjoining receiving section (2) for receiving the axle guide,
wherein the axle body in the center section (4) has an essentially constant wall thickness (s1),
wherein the axle body in the receiving section (2) has at least in some regions a wall thickness (s2, s3) which is greater than the wall thickness (s1) of the center section (4) due to a forming process, and **characterized in that** the outer diameter (d2) of the axle body is larger in the receiving section (2) than in the center section (4),
wherein the receiving section (2) has a first and a second connection region (6, 8) for arrangement of side walls (50, 52) of the axle guide, as well as a center region (10) lying in between,
wherein the wall thickness (s2, s3) of the first and second connection region is greater than the wall thickness (s1) of the center region (10) and the center section (4), and
wherein the wall thickness (s2) of the first connection region (6) is greater than that of the second connection region (8).

11. Method for making an axle body, especially for a commercial vehicle, comprising the steps:
- providing an axle pipe with an essentially constant pipe cross section, comprising a center section (4) and at least one adjoining receiving section (2) for receiving an axle guide, and
- upsetting and/or forging of the receiving section (2) so that an enlargement of the wall thickness (s2, s3) of the receiving section (2) at least in some regions and an enlargement of the outer diameter (d2) of the axle body in the receiving section (2) is created,
wherein the receiving section (2) has a first and a second connection region (6, 8) for arrangement of side walls (50, 52) of the axle guide, as well as a center region (10) lying in between,
wherein the wall thickness (s2, s3) of the first and second connection region is greater than the wall thickness (s1) of the center region (10) and the center section (4), and
wherein the wall thickness (s2) of the first connection region (6) is greater than that of the second connection region (8).

12. Method for making a running gear design, especially for a commercial vehicle, comprising the steps:
- providing at least one axle guide,
- providing an axle pipe with an essentially constant pipe cross section, comprising a center section (4) and at least one adjoining receiving section (2) for the arrangement of the axle guide,
- upsetting and/or forging of the receiving section (2) so that an enlargement of the wall thickness (s2, s3) of the receiving section (2) at least in some regions and an enlargement of the outer diameter (d2) of the axle body in the receiving section (2) is created,
wherein the receiving section (2) has a first and a second connection region (6, 8) for arrangement of side walls (50, 52) of the axle guide, as well as a center region (10) lying in between,
wherein the wall thickness (s2, s3) of the first and second connection region is greater than the wall thickness (s1) of the center region (10) and the center section (4), and
wherein the wall thickness (s2) of the first connection region (6) is greater than that of the second connection region (8), and
- direct fastening of the axle guide on the receiving section (2).

13. Running gear design, especially for a commercial vehicle, comprising an axle body formed as an axle pipe and at least one axle guide,
wherein the axle body has a center section (4) and at least one adjoining receiving section (2) for receiving the axle guide,
wherein the axle body in the center section (4) has an essentially constant wall thickness (s1),
wherein the axle body in the receiving section (2) has a wall thickness (s2, s3) which is greater than the wall thickness (s1) of the center section (4) due to a forming process, and **characterized in that**
the outer diameter (d2) of the axle body is larger in the receiving section (2) than in the center section (4),
wherein the axle body is widened or broadened in the receiving section (2) so that the cross section of the axle pipe is enlarged, and
wherein the inner diameter and the outer diameter of the axle body in the region of the receiving section (2) are greater than in the center section (4).

14. Method for making an axle body, especially for a commercial vehicle, comprising the steps:
- providing an axle pipe with an essentially constant pipe cross section, comprising a center section (4) and at least one adjoining receiving section (2) for receiving an axle guide, and
- upsetting and/or forging of the receiving section (2) so that an enlargement of the wall thickness (s2, s3) of the receiving section (2) and an enlargement of the outer diameter (d2) of the axle body in the receiving section (2) is created,
wherein the axle body is widened or broadened in the receiving section (2) so that the cross section of the axle pipe is enlarged, and
wherein the inner diameter and the outer diameter of the axle body in the region of the receiving section (2) are greater than in the center section (4).

15. Method for making a running gear design, especially for a commercial vehicle, comprising the steps:
- providing at least one axle guide,
- providing an axle pipe with an essentially constant pipe cross section, comprising a center section (4) and at least one adjoining receiving section (2) for the arrangement of the axle guide,
- upsetting and/or forging of the receiving section (2) so that an enlargement of the wall thickness (s2, s3) of the receiving section (2) and an enlargement of the outer diameter (d2) of the axle body in the receiving section (2) is created,
wherein the axle body is widened or broadened in the receiving section (2) so that the cross section of the axle pipe is enlarged, and
wherein the inner diameter and the outer diameter of the axle body in the region of the receiving section (2) are greater than in the center section (4), and
- direct fastening of the axle guide on the receiving section (2).

## Revendications

1. Corps d'essieu, en particulier pour un véhicule utilitaire, qui est réalisé essentiellement sous forme de tube d'essieu, comprenant un tronçon médian (4) et au moins un tronçon de réception (2) qui s'y raccorde pour la réception d'un guide d'essieu,
ledit corps d'essieu présentant dans le tronçon médian une épaisseur de paroi (s1) essentiellement constante,
et le corps d'essieu présentant, dans le tronçon de réception (2), au moins localement une épaisseur de paroi (s2, s3) qui, en raison d'une mise en forme, est supérieure à l'épaisseur de paroi (s1) du tronçon médian,
**caractérisé en ce que** le diamètre extérieur (d2) du corps d'essieu est plus grand dans le tronçon de réception (2) que dans le tronçon médian (4),
dans lequel le tronçon de réception (2) comprend une première zone de liaison et une seconde zone de liaison (6, 8) pour l'agencement de parois latérales (50, 52) du guide d'essieu, ainsi qu'une zone médiane (10) située entre elles, et dans lequel l'épaisseur de paroi (s2, s3) de la première et de la seconde zone de liaison est supérieure à l'épaisseur de paroi (s1) de la zone médiane (10) et du tronçon médian (4), et
dans lequel l'épaisseur de paroi (s2) de la première zone de liaison (6) est supérieure à celle de la seconde zone de liaison (8).

2. Corps d'essieu selon la revendication 1, dans lequel le diamètre intérieur (d4) du corps d'essieu dans le tronçon de réception (2) est plus petit que dans le tronçon médian (4).

3. Corps d'essieu selon la revendication 1, dans lequel le corps d'essieu est au moins localement élargi dans le tronçon de réception (2) de telle façon que la section du tube d'essieu est agrandie.

4. Corps d'essieu selon l'une des revendications précédentes, dans lequel l'épaisseur de paroi (s1) du tronçon médian (4) et celle de la zone médiane (10) sont essentiellement égales.

5. Corps d'essieu selon l'une des revendications précédentes, dans lequel l'épaisseur de paroi (s2) de la première zone de liaison (6) et plus grande que celle de la seconde zone de liaison (8), et dans lequel la première zone de liaison (6) est de préférence tournée vers le milieu de l'essieu.

6. Corps d'essieu, en particulier pour un véhicule utilitaire, qui est réalisé essentiellement sous forme de tube d'essieu, comprenant un tronçon médian (4) et au moins un tronçon de réception (2) qui s'y raccorde pour la réception d'un guide d'essieu,
ledit corps d'essieu présentant dans le tronçon médian une épaisseur de paroi (s1) essentiellement constante,
et le corps d'essieu présentant, dans le tronçon de réception (2), au moins localement une épaisseur de paroi (s2, s3) qui, en raison d'une mise en forme, est supérieure à l'épaisseur de paroi (s1) du tronçon médian,
**caractérisé en ce que** le diamètre extérieur (d2) du corps d'essieu est plus grand dans le tronçon de réception (2) que dans le tronçon médian (4),
dans lequel le corps d'essieu est élargi dans le tronçon de réception (2) de telle façon que la section du tube d'essieu est agrandie, et dans lequel le diamètre intérieur et le diamètre extérieur du corps d'essieu dans la zone du tronçon de réception sont plus grands que dans la zone du tronçon médian (4).

7. Corps d'essieu selon l'une la revendication 6, dans lequel l'épaisseur de paroi (s2) du tronçon de réception (2) est essentiellement constante.

8. Corps d'essieu selon l'une des revendications précédentes, comprenant en outre au moins un tronçon de réception de roue (12), qui est agencé sur le tronçon de réception (2).

9. Corps d'essieu selon l'une des revendications précédentes, dans lequel le corps d'essieu est réalisé d'une seule pièce.

10. Train de roulement, en particulier pour un véhicule utilitaire, comprenant un corps d'essieu réalisé sous forme de tube d'essieu et au moins un guide d'essieu,
dans lequel le corps d'essieu comprend un tronçon médian (4) et au moins un tronçon de réception (2) qui s'y raccorde pour la réception du guide d'essieu,
dans lequel le corps d'essieu possède dans le tronçon médian (4) une épaisseur de paroi (s1) essentiellement constante,
dans lequel le corps d'essieu possède dans le tronçon de réception (2) au moins localement une épaisseur de paroi (s2, s3) qui, en raison d'une mise en forme, est supérieure à l'épaisseur de paroi (s1) du tronçon médian (4),
**caractérisé en ce que** le diamètre extérieur (d2) du corps d'essieu dans le tronçon de réception (2) est plus grand que dans le tronçon médian (4)
dans lequel le tronçon de réception (2) comprend une première zone de liaison et une seconde zone de liaison (6, 8) pour l'agencement de parois latérales (50, 52) du guide d'essieu, ainsi qu'une zone médiane (10) située entre elles, et dans lequel l'épaisseur de paroi (s2, s3) de la première et de la seconde zone de liaison est supérieure à l'épaisseur de paroi (s1) de la zone médiane (10) et du tronçon médian (4), et
dans lequel l'épaisseur de paroi (s2) de la première zone de liaison (6) est supérieure à celle de la seconde zone de liaison (8).

11. Procédé pour la réalisation d'un corps d'essieu, en particulier pour un véhicule utilitaire, comprenant les étapes suivantes :
- préparation d'un tube d'essieu avec une section de tube essentiellement constante, comprenant un tronçon médian (4) et au moins un tronçon de réception (2) qui s'y raccorde pour la réception d'un guide d'essieu, et
- refoulement et/ou forgeage du tronçon de réception (2) de telle manière que l'on réalise au moins localement un agrandissement de l'épaisseur de paroi (s2, s3) du tronçon de réception (2) et un agrandissement du diamètre extérieur (d2) du corps d'essieu dans le tronçon de réception (2)
dans lequel le tronçon de réception (2) comprend une première zone de liaison et une seconde zone de liaison (6, 8) pour l'agencement de parois latérales (50, 52) du guide d'essieu, ainsi qu'une zone médiane (10) située entre elles, et dans lequel l'épaisseur de paroi (s2, s3) de la première et de la seconde zone de liaison est supérieure à l'épaisseur de paroi (s1) de la zone médiane (10) et du tronçon médian (4), et
dans lequel l'épaisseur de paroi (s2) de la première zone de liaison (6) est supérieure à celle de la seconde zone de liaison (8).

12. Procédé pour la réalisation d'un train de roulement, en particulier pour un véhicule utilitaire, comprenant les étapes suivantes :
- préparation d'au moins un guide d'essieu,
- préparation d'un tube d'essieu avec une section de tube essentiellement constante, comprenant un tronçon médian (4) et au moins un tronçon de réception (2) qui s'y raccorde pour l'agencement du guide d'essieu,
- refoulement et/ou forgeage du tronçon de réception (2) de telle manière que l'on réalise au moins localement un agrandissement de l'épaisseur de paroi (s2, s3) du tronçon de réception (2) et un agrandissement du diamètre extérieur (d2) du corps d'essieu dans le tronçon de réception (2), et
dans lequel le tronçon de réception (2) comprend une première zone de liaison et une seconde zone de liaison (6, 8) pour l'agencement de parois latérales (50, 52) du guide d'essieu, ainsi qu'une zone médiane (10) située entre elles, et dans lequel l'épaisseur de paroi (s2, s3) de la première et de la seconde zone de liaison est supérieure à l'épaisseur de paroi (s1) de la zone médiane (10) et du tronçon médian (4), et
dans lequel l'épaisseur de paroi (s2) de la première zone de liaison (6) est supérieure à celle de la seconde zone de liaison (8), et
- fixation directe du guide d'essieu sur le tronçon de réception (2)

13. Train de roulement, en particulier pour un véhicule utilitaire, comprenant un corps d'essieu réalisé sous forme de tube d'essieu et au moins un guide d'essieu,
dans lequel le corps d'essieu comprend un tronçon médian (4) et au moins un tronçon de réception (2) qui s'y raccorde pour la réception du guide d'essieu,
dans lequel le corps d'essieu possède dans le tronçon médian (4) une épaisseur de paroi (s1) essentiellement constante,
dans lequel le corps d'essieu possède dans le tronçon de réception (2) au moins localement une épaisseur de paroi (s2, s3) qui, en raison d'une mise en forme, est supérieure à l'épaisseur de paroi (s1) du tronçon médian (4),
**caractérisé en ce que** le diamètre extérieur (d2) du corps d'essieu dans le tronçon de réception (2) est plus grand que dans le tronçon médian (4) dans lequel le corps d'essieu est élargi dans le tronçon de réception (2) de telle façon que la section du tube d'essieu est agrandie, et dans lequel le diamètre intérieur et le diamètre extérieur du corps d'essieu dans la zone du tronçon de réception sont plus grands que dans la zone du tronçon médian (4).

14. Procédé pour la réalisation d'un corps d'essieu, en particulier pour un véhicule utilitaire, comprenant les étapes suivantes :
- préparation d'un tube d'essieu avec une section de tube essentiellement constante, comprenant un tronçon médian (4) et au moins un tronçon de réception (2) qui s'y raccorde pour la réception d'un guide d'essieu, et
- refoulement et/ou forgeage du tronçon de réception (2) de telle manière que l'on réalise au moins localement un agrandissement de l'épaisseur de paroi (s2, s3) du tronçon de réception (2) et un agrandissement du diamètre extérieur (d2) du corps d'essieu dans le tronçon de réception (2)
dans lequel le corps d'essieu est élargi dans le tronçon de réception (2) de telle façon que la section du tube d'essieu est agrandie, et dans lequel le diamètre intérieur et le diamètre extérieur du corps d'essieu dans la zone du tronçon de réception sont plus grands que dans la zone du tronçon médian (4).

15. Procédé pour la réalisation d'un train de roulement, en particulier pour un véhicule utilitaire, comprenant les étapes suivantes :
- préparation d'au moins un guide d'essieu,
- préparation d'un tube d'essieu avec une section de tube essentiellement constante, comprenant un tronçon médian (4) et au moins un tronçon de réception (2) qui s'y raccorde pour l'agencement du guide d'essieu,
- refoulement et/ou forgeage du tronçon de réception (2) de telle manière que l'on réalise au moins localement un agrandissement de l'épaisseur de paroi (s2, s3) du tronçon de réception (2) et un agrandissement du diamètre extérieur (d2) du corps d'essieu dans le tronçon de réception (2), et
dans lequel le corps d'essieu est élargi dans le tronçon de réception (2) de telle façon que la section du tube d'essieu est agrandie, et dans lequel le diamètre intérieur et le diamètre extérieur du corps d'essieu dans la zone du tronçon de réception sont plus grands que dans la zone du tronçon médian (4).
